# EUROPEAN PATENT SPECIFICATION

(11) **EP 3 407 303 B1**
(45) Date of publication and mention of the grant of the patent: **11.09.2019**
(21) Application number: 17172968.4
(22) Date of filing: 25.05.2017
(51) Int. Cl.: G06T 19/00, G06T 11/00

(54) **AUGMENTED REALITY DEVICE**
AUGMENTED-REALITY-VORRICHTUNG
DISPOSITIF DE RÉALITÉ AUGMENTÉE

(43) Date of publication of application: 28.11.2018
(73) Proprietor: Fujitsu Limited, Kawasaki-shi, Kanagawa 211-8588 (JP)
(72) Inventor: VAN DEN BERGHE, Sven, Marlow, Buckinghamshire SL7 3LE (GB)
(74) Representative: Haseltine Lake Kempner LLP

(56) References cited:
- Kuraki, K; Kato, K. and Tanaka, R.: "ID-embedded LED Lighting Technology for Providing Object-related Information", FUJITSU Sci. Tech. J., vol. 52, no. 1 January 2016 (2016-01), pages 85-90, XP002773159, Retrieved from the Internet: URL:http://www.fujitsu.com/global/document s/about/resources/publications/fstj/archiv es/vol52-1/paper12.pdf [retrieved on 2017-08-24]
- Lotfi Abdi ET AL: "Augmented Reality Based Traffic Sign Recognition for Improved Driving Safety" In: "Network and Parallel Computing", 1 January 2015 (2015-01-01), Springer International Publishing, Cham 032548, XP055374989, ISSN: 0302-9743 ISBN: 978-3-642-01523-6 vol. 9066, pages 94-102, DOI: 10.1007/978-3-319-17765-6_9, * abstract *

## Description

### INTRODUCTION

This invention lies in the field of augmenting a video display of a physical sign. The display may be, for example, on a mobile device such as a phone, PDA or headset. The invention has applications in the technical area of augmented reality. Augmented reality is taken to be a live view of a user's field of view of a physical real-world environment, wherein the objects captured within the user's field of view are augmented, that is replaced, superimposed, overlaid or supplemented, by a computer-generated object.

### BACKGROUND

One of the goals of augmented reality is to customise a user's view of their world as presented through a smartphone screen or virtual reality headsets. This customisation may take the form of annotations placed on objects in the field of view or perhaps inserting objects into the view. A more interesting application of augmented reality is to modify the view so that the information presented by objects in the view is customised to the viewing users according to their context. One possible customisation is to automatically show all signs in the view translated into the user's native language with the translated text placed over the original text in such a way as to be indistinguishable from the unmodified view (with the correct typeface, colour, skew etc.). Information presented in this natural way is more comprehensible than, say, data overlays (which may not be attached to the correct places in the view and which, by floating unnaturally across the view, distract from interpretation).

Non-patent literature "Kuraki, K; Kato, K. and Tanaka, R.: "ID-embedded LED Lighting Technology for Providing Object-related Information", FUJITSU Sci. Tech. J., vol. 52, no. 1 January 2016 (2016-01), pages 85-90, XP002773159, Retrieved from the Internet: URL:http://www.fujitsu.com/global/documents/about/resources/publications/fstj/archives/vol5 2-1/paper12.pdf" discloses an outline of the technology required for embedding ID information in light, casting of such light on an object and the recovery of the ID from the reflected light using image processing technology.

### STATEMENTS OF INVENTION

According to an embodiment of a first aspect, there is provided an augmented reality device to augment a video display of a sign using context of a device user, as disclosed in claim 1.

In particular, embodiments relate to capturing light including embedded sign information reflected from a sign for generating replacement signage to be displayed on a video display in real-time. The replacement signage is provided in dependence upon user context - information about the user, for example which is relevant to the way the original signage could be improved for the specific user.

The word "sign" is taken to include a physical notice, conveying information or instructions using any of written text, symbols, pictograms, shape conventions and colour conventions. For example the sign may be a signboard, signpost, road sign or poster. A sign is thus taken to be an object used to communicate a message to the device user. The sign may convey the message to the device user using images, symbols, or specific wording.

The augmented reality device captures the video stream information of the scene including the sign and displays an augmented real time video stream information to the user through the video display. The video stream information is a real time video stream of the scene and comprises a collection of real time images. The light capture component capturing the video stream information may be a camera of the augmented reality device. The camera may be, for example, a smart device camera, and the smart device may further comprise a processor and a video display.

The scene captured by the augmented reality device includes the sign that is observed by the device user and for which the user requires replacement signage. The augmented reality device may continue to perform augmentation of the video stream information even in the case in which the user is not observing the sign. For example, in the case in which the augmented reality device includes an eye tracking component, augmentation of the video stream information may be performed even if the eye tracking component identifies that the user is not looking directly at the sign.

The identifying lamp/light bulb may be, for example, an LED. The light may be captured after having been reflected from the sign in the scene, additionally, the light may be captured directly from the identifying lamp from which it is being emitted.

The embedded sign information may be encoded, for example, as binary code by virtue of colour modulation of the light according to an embedded sign information coding scheme. The embedded sign information may be extracted by means of a decoding scheme, such as a binary code translator. Embedded sign information is taken to include information that is encoded into the light that is emitted from the identifying lamp (a "light tag"), and may include, for example, any of identification of a sign or an indication as to the sign type, sign colour, sign shape and standardised sign information.

The extracted embedded sign information and the user context are processed by the augmented reality device processor in order to produce contextual signage information. Contextual signage information is taken to be information that is conveyed by the sign and which is amended/supplemented based on the user context. For example, it may be in the form of directions to a user destination (having taken into account the context of the user). The contextual signage information may also include information about the physical attributes of the sign. For example, the contextual signage information may include any of facts, measurements, colour schemes or metadata about the signage information. Facts may be educational and/or anecdotal information about an object to which the sign is pointing; measurements may be three dimensional longitudinal x, y and z measurements of the physical sign that may be used to generate the augmented part of the image including replacement signage; colour schemes may be specifications of the sign border colour, background colour and text colour; metadata may be an indication that the sign is of a particular type, such as a road sign.

The contextual signage information may be subsequently used by the augmented reality device processor to generate the augmented part of the images including replacement signage as an augmented version of the sign that is produced by the augmented reality device.

An area of the images that includes the signage is then replaced by the augmented part of the image including replacement signage. Hence an augmented part may be generated for each real-time image of the scene with the sign. Real time is taken to mean instantaneous, or as close to instantaneous as possible taking into consideration processor speeds and signal propagations delays. The real-time images of the scene that include replacement signage may be displayed to the device user through the video display as a series of chronological real-time images in the form of an augmented video stream. The video display may be, for example, a smart device screen.

The augmented reality device and system may provide a way of acquiring contextual signage information and providing the contextual signage information to the device user without requiring a physical hardwire connection or a wireless transmitter-receiver connection between the illumination lamp and the sign. The embedded sign information is embedded into the light by the identifying lamp and the light is subsequently reflected from the sign to the light capturing component. Therefore, the augmented reality device efficiently conveys contextual signage information to the device user without relying on energy consuming components such as transmission cables, transmitters and receivers.

By acquiring embedded sign information through light, the augmented reality device is capable of communicating information to the device user without obscuring or interfering with the view of a non-user of the augmented reality device who is also observing the sign. Also, the use of light to convey information enhances the view of the sign to device users and non-users of the augmented reality device in otherwise poorly lit environments.

The processor may be to use the user context in the form of one or more of a user language, user position, user status, user preferences, user requirements and user destination to process the extracted sign information and produce contextual signage information.

The user context (often language and/or location) may be determined based on parameters input by the device user. Additionally or alternatively, the user context may be inferred from information stored on the augmented reality device, such as most recently used applications or semantic analysis of the device user's recently transmitted text messages.

Some other forms of user context may include:
(a) a preferred means of displaying the contextual signage information to the device user (e.g. using a pictogram or using text).
(b) a requirement for providing the contextual signage information as auditory information through a speaker of the augmented reality device in addition to displaying the real-time images of the scene through the video display.
(c) personalised advertising based on loyalty membership status.
(d) air mile status used to guide the device user to appropriate airline lounge.
(e) declared user interests used to create guided routes through buildings such as museums and art galleries.
(f) the user's dietary preferences or restrictions to enable selective highlighting of items on a restaurant's menu in the augmented view.

The processor may identify the region of the video display in which the sign in located. This cuts down the processing required for subsequent steps, such as processing the region to identify the sign location more precisely. Part or all of the sign area, possibly defined in terms of pixels, is subsequently replaced with the augmented part of the image including replacement signage.

The processor may format the augmented part of the images including the replacement signage so that it appears as if it is part of the sign in the video stream. For example, the processor may identify an image area to be modified, track the area through multiple frames including any distortions caused by device movement, match background colour and shape and/or size the contextual signage information as replacement signage to fit within the area.

The formatting of the augmented part of the images including the replacement signage uses physical information about the sign, which includes physical dimensions, scale, skew and orientation of the sign from the perspective of the augmented reality device. Calculations may be used to format the augmented part of the images.

Device storage may store an embedded sign information coding scheme, the coding scheme being used by the processor to extract the embedded sign information (and by the lamp for embedding the sign information).The coding scheme may be used simply to identify the sign (and then the identification may be sent to a database for retrieval of information about the sign). Alternatively or additionally, the coding scheme may refer to attributes of the sign.

For example, the coding scheme may use a plurality of bits, including fields for one or more of the following:
language;
sign context of the sign environment;
information type of the sign;
physical type of the sign (colour, shape etc);
whether to augment or not.

The embedded sign information coding scheme may be stored in a dedicated memory location of the augmented reality device. The embedded sign information coding scheme may be, for example, binary coded decimal code, American standard code for information interchange (ASCII) or unicode.

The bits of the coding scheme may include additional fields, for example, sign compliance requirement. The sign compliance requirement field may indicate whether compliance with the signage information is essential or optional, e.g. a road traffic "give way" sign must be complied with, whereas a directional sign need not.

The extracted sign information may include an identifier; and the processor may output the identifier and the user context to a sign database, wherein the sign database links identifiers to variants of contextual signage information or of replacement signage information, one of the variants for the identifier being selected according to the user context; and input the selected variant from the sign database; the selected variant being used as the contextual signage information or replacement signage. Hence there is the possibility that formatting to convert the contextual signage information to replacement signage takes place at the sign database.

The identifier included in the extracted embedded sign information may be determined from the embedded sign information coding scheme. For example, a binary coded decimal coding scheme may be identified by the decoded decimal value, e.g. a binary code of "10000" would identify the sign as a sign of type "16".

In one arrangement, the device storage stores the sign database as a local database (in the device, such as in dedicated memory hardware). Otherwise, the device may include a transmitter and receiver to transmit the identifier and user context and to receive contextual signage information or replacement signage from an external database located, for example, at an external server.

The sign database may include physical information about the sign which is used to format the contextual signage information by transmitting the physical information to the device with the selected variant. An alternative, as mentioned above, is that the formatting takes place at the sign database so that the replacement signage itself is transmitted.

The variants may be stored in the sign database in categories according to common themes, such as sign type, sign context (e.g. sign environment), shape, colour or size. Alternatively, the replacement signage information may be stored in the sign database as categories according to specific sign identifiers. The selection of a particular variant of replacement signage information may depend on one or more criteria of user context.

The processor (or the sign database) may replace the entire sign as the augmented part of the image using the physical information to help determine an overlay position and orientation. In this case, when the augmented part is displayed on the video display in real-time images the augmented part appears to be overlaid over the entire sign from the perspective of the device user. Alternatively, the video display may be configured to replace (only) the particular area and/or pixels of the video display that display the signage with the replacement signage, and not the whole sign. In a translation embodiment, the processor may recognise sign text from the captured video stream information or from an embedded sign information coding scheme; output the sign text and the user context to a translation service; and input a translation of the sign text from the translation service as the contextual signage information.

The translation service may be a third party service and/or may be part of the sign database. The language into which the sign text is translated is dependent on the user context, as defined by the user context. The translation of the sign text may be included in the contextual signage information in addition to other contextual signage information, such as pictograms and images.

According to an embodiment of a second aspect, there is provided a system to augment video display of a sign on a device with context of a user, according to claim 13.

According to an embodiment of a third aspect, there is provided a method of augmenting a video display of a sign using context of a device user, according to claim 14.

According to an embodiment of a fourth aspect, there is provided a computer program, according to claim 15, which when executed on a portable computer device carries out the method defined above or elsewhere in this document.

Embodiments of another aspect include a computer program which, when executed by a computing apparatus, causes the computing apparatus to function as a computing apparatus defined above as an invention embodiment.

Furthermore, embodiments of the present invention include a computer program or suite of computer programs, which, when executed by a plurality of interconnected computing devices, cause the plurality of interconnected computing devices to perform a method embodying the present invention, or to cause the plurality of interconnected computing devices to function as a computing apparatus defined above or elsewhere in this document as an invention embodiment. A method or system according to preferred embodiments of the present invention may comprise any combination of the device aspects. Methods or computer programs according to further embodiments may be described as computer-implemented in that they require processing and memory capability.

The apparatus according to preferred embodiments is described as configured or arranged to, or simply "to" carry out certain functions. In preferred embodiments, the configuration or arrangement is by software.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output.

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The invention is described in terms of particular embodiments. Other embodiments are within the scope of the following claims. For example, the steps of the invention may be performed in a different order and still achieve desirable results.

### DETAILED DESCRIPTION

Embodiments will now be described with reference to the accompanying drawings, in which:
Figure 1 is a schematic diagram of a particular embodiment of an augmented reality system;
Figure 2 is a schematic diagram of an augmented reality device;
Figure 3 is a schematic diagram of another embodiment of an augmented reality system including an augmented reality device;
Figure 4 is a flowchart outlining the process of an augmented reality system;
Figure 5 is a schematic diagram of another embodiment of an augmented reality system;
Figure 6 is a flowchart outlining the process of a particular embodiment of the augmented reality system;
Figure 7 is a schematic diagram of another embodiment of an augmented reality system;
Figure 8 is a flowchart outlining a particular embodiment of an augmented reality system;
Figure 9 is a flowchart outlining details of step S820 of Figure 8 of an augmented reality system; and
Figure 10 a schematic diagram of another embodiment of an augmented reality system.

Embodiments describe a system for augmenting a user's view of their environment as presented on a device screen by modifying signage within the device's view according to the user's context. Modifications to the signs may include translation of the text into the user's language, user-specific directions and advertising. The modified view may appear natural (i.e. similar to the view or part of the view replaced), with the changes to the signage appearing to be part of the environment. For example, the modified view changes with e.g. a change in position of the user in the same way that the original view would and the replaced area has the same look - font, colour, design etc. as the original. View augmentation may occur in real-time on current smartphones or other mobile devices, such as PDAs, iPads, virtual reality headsets and other tablet computers.

Embodiments may use light tags (as embedded information) placed in the environment to reduce processing requirements for augmentation; the information conveyed by the light tags simplifies interpretation of the raw view. In some instantiations, the tag may be used to retrieve ground-truth data from a database. Such tags include machine interpretable information about the sign: what it is conveying and the look of the sign, for example as a code or an index. In other instantiations the tag may itself convey information about the sign's context. These two approaches may be combined as necessary. Application areas of the invention include transport hubs, hospitals and any other large, complex buildings.

The processing requirements to interpret an arbitrary video feed, i.e. identify any text that needs replacement, translate the text and render the modified view in real time, and thereby merge a dynamically adapting signage into an augmented reality application, are beyond the capabilities of the devices that a normal user is likely to be carrying.

In real-life applications this augmented reality translation has a number of limitations which arise due to the processing requirements of optical character recognition (OCR) on mobile devices:
- The target typefaces should be simple and unadorned: handwritten, cursive or ornate faces present difficulties in recognition.
- The OCR may not recognise all the letters in an image, resulting in untranslated segments in the augmented text.
- The automatic translation only operates within the context of the detected text so that words and phrases are often mistranslated, colloquialisms and puns missed and slogans incorrectly rendered.
- The user needs to align the text carefully with guidelines on the smartphone display: detection with a rapidly changing view or with the target text in arbitrary parts of the field of view is not possible.

The inventor has come to the realisation that, if the physical environment of the view may be tagged so that any areas that need to be modified by the augmented reality application may be easily identified and the replacement text efficiently and accurately determined, then the remaining tasks may be performed by current smartphones.

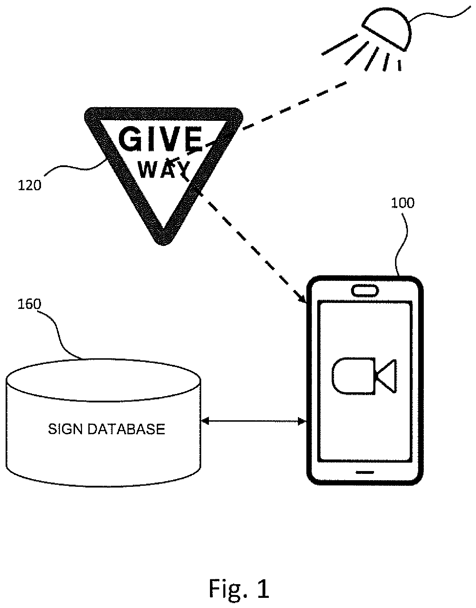

Figure 1 illustrates an augmented reality system. The augmented reality system includes an augmented reality device 100, a sign 120, an identifying lamp 140 and an optional sign database 160. The dashed line between the identifying lamp 140, the sign 120 and the augmented reality device 100 represents light being emitted from the identifying lamp 140, reflected from the sign 120 and captured by the augmented reality device 100. The solid line between the optional sign database 160 and the augmented reality device 100 represents the transfer of information between the sign database 160 and the augmented reality device 100.

The light emitted from the identifying lamp 140 contains embedded information about the sign 120 from which the light is reflected. The embedded information contained within the reflected light is captured by the augmented reality device 100 and processed, thereby producing contextual signage information. The contextual signage information is used by the augmented reality device to generate real-time augmented images of a scene within which the sign 120 is located in that the contextual information is used to generate replacement signage replacing a previously displayed image or partial image of the sign 120. The real-time images generated by the augmented reality device 100 hence include additional contextual information about the sign appropriate to the device user in the form of an augmented part. The real-time images including the replacement signage are displayed to the user through the augmented reality device 100 in chronological order by generation of an augmented video stream including the sign 120 and replacement signage.

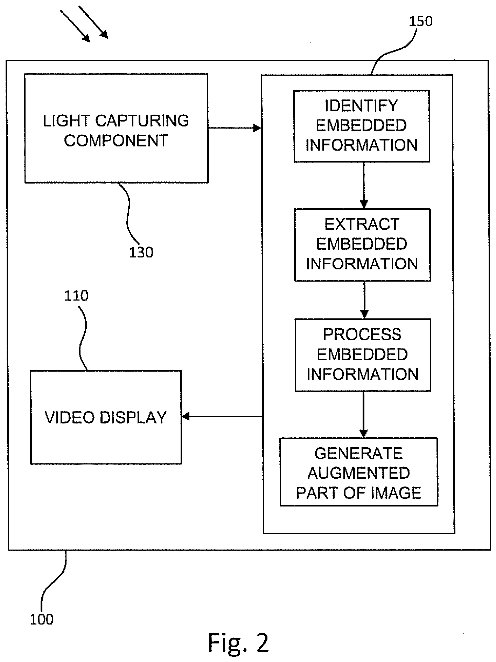

Figure 2 illustrates an embodiment of the augmented reality device 100 of Figure 1. The augmented reality device 100 includes a light capturing component 130, a processor 150 and a video display 110. The lines between the features of the augmented reality device 100 represent the transfer of information. Other exchanges of data beyond those illustrated may also occur: for simplicity the illustration represents specific data exchanges.

The light capture component 130 captures video stream information of the scene including light reflected from the sign 120, the reflected light being emitted from the identifying lamp 140 which embeds information.

Technology in the identifying lamp enhances the light from ordinary LED lamps with an embedded digital identification tag and the device 100 includes associated technology to recover this tag efficiently and reliably from the light reflected by the objects that the lamps are illuminating. The tag recovery algorithms work reliably under different lighting conditions and may detect the presence of a tag in a field of view that encompasses much more than just the illuminated target object. The identifying lamps operate in conjunction with an enhanced smartphone application on the device 100. The advantages of this technology are the robustness under different lighting, needing only reflected light (i.e. no need to point a phone's camera at the lamp) and unobtrusiveness (to an unaided eye the display looks like an ordinary light).

The embedded information is embedded into the light emitted from the identifying lamp 140 by virtue of colour modulation. Colour modulation is generated by synthesising up to three different colours of light from the identifying lamp 140 and varying the intensity of each of these light colours over a period of time by increasing or decreasing the amplitude of each of the colours of light individually. The colours synthesised by the identifying lamp 140 may be, for example, red, green and blue (RBG). The intensity level of each colour is varied at a frequency above the critical flicker frequency, where the critical flicker frequency is the frequency below which the human eye may distinguish a flickering light from a steady, non-flickering light. Therefore, the variations in the intensity of the colour, which could potentially result in a flickering effect of the light, are not perceivable to the human eye.

In one particular example, colour modulation is used to embed the contextual information in the form of binary information. The binary information may be represented as "1"s and "0"s, where a "1" or "0" correspond to a particular waveform. For example, the colour modulated waveform emitted from the identifying lamp may represent a "1" or "0" by varying the amplitude of the modulated waveform and/or varying the wavelength of the modulated waveform, e.g. a "1" may have an amplitude of X and a wavelength of Y, while a "0" may have an amplitude of 0.5X and a wavelength of 2Y. The two types of modulated waveforms may then be used to embed a specific binary code into the light emitted from the identifying lamp. The variations in amplitude between the "1" and "0" type waveforms are such that any change in colour that results from the changes in amplitude are below the threshold of colour change that is perceivable to the human eye. Hence, the light that is reflected from the sign 120 remains at a constant colour from the point of view of a human eye, and therefore any changes in amplitude of individual colours is not perceivable by the device user of the augmented reality device 100, or by any third parties.

The operational frequency at which the colour modulation operates is such that the embedded information may be detected by a conventional light capturing component, e.g. cameras in smart devices and projectors. For example, the operational frequency of the colour modulation may be restricted to less than 30Hz in cases where the light capturing component 130 operates at a frame rate of 30fps. By restricting the operational frequency of the colour modulation to less than the frame rate of the light capturing component 130, the augmented reality system ensures than no information is lost in the transmission of embedded information. The light capturing component 130 may capture the light directly from the identifying lamp 140. Alternatively, the light capturing component 130 may capture the light after it has been reflected from the sign 120. Due to the absorption of particular wavelengths of light as they are reflected from the sign, which results in small changes to the characteristics of the colour modulated waves, the signage augmenting device may include a reflection compensation scheme. The reflection compensation scheme is configured to estimate the variations in reflectance of each RGB colour, due to absorption of a particular colour, and correct the amplitude of each colour component according to the estimated variation in reflectance. For example, a red object being irradiated with white light (made up of RGB components) will reflect the red component of the white light and absorb the green and blue components of the white light. In this example, the augmented reality device 100 estimates the reduction in amplitude of the green and blue light components, due to absorption, in order to correctly interpret the colour modulation waveform, and hence the embedded information.

The portable device also includes a processor 150 and a video display 110. It may include a memory (not shown), a keyboard (often as part of the device screen and also not shown) and other usual components of a portable computing device. The components may be connectable to one another via a bus.

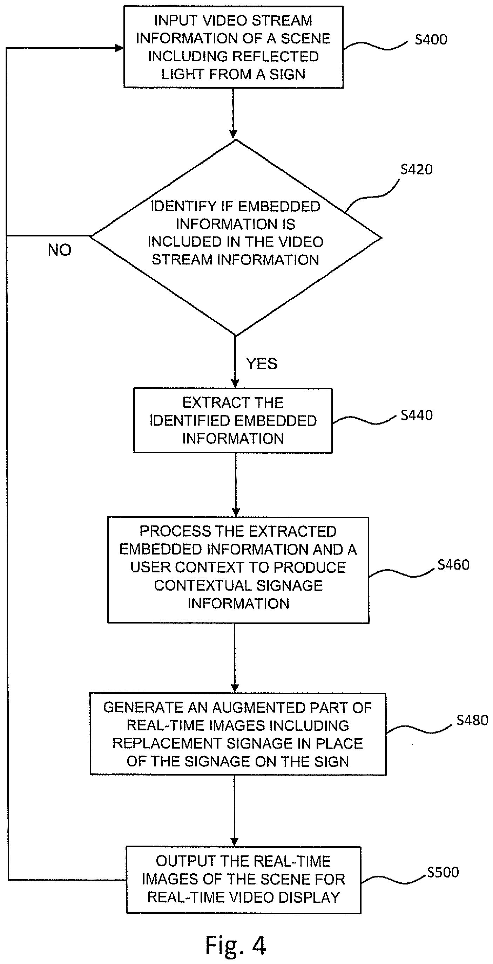

The memory may include a computer readable medium, configured to carry computer-executable instructions to give the functionality shown in figure 2 and carry out the steps shown in figure 4 and/or to have data structures stored thereon. Computer-executable instructions may include, for example, instructions and data accessible by and causing a general purpose computer, special purpose computer, or special purpose processing device (e.g., one or more processors as part of the device) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor may be configured to control the computing device and execute processing operations, for example executing code stored in the memory to implement the various different functions of the augmented reality device 100 described here and in the claims. The memory stores data such as user context, contextual signage information, replacement signage and other video data being read and written by the processor. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The processor 150 identifies if the captured video stream information includes embedded information and when embedded information is included, extracts the embedded information.

As mentioned above, the embedded information may be in the form of, for example, binary information represented by a sequence of bits, i.e. "1"s and "0"s. The embedded information is decoded according to an embedded information coding scheme to generate extracted embedded information. The embedded information, the embedded information coding scheme and the extracted embedded information are stored in a dedicated memory location of the augmented reality device 100.

The processor 150 processes the extracted information and uses a user context to produce contextual signage information.

The processor 150 may acquire the user context in the form of, for example, binary code, plain text or ASCII code. User context may be input directly into the augmented reality device 100 by the device user via a graphical user interface (GUI). For example, the video display 110 may offer a selection of options to the device user upon starting an augmented reality device application. Such options may include: preferred language, information filter preferences, travel destination and other requirements and/or requests that are specific to the device user at the particular time of using the augmented reality device. Alternatively, user context may be inferred by the processor 150 based on the history of use of the augmented reality device 100 or based on a pattern in which third party applications also stored on the augmented reality device 100 are being used by the device user. The user context may be a collection of values representing a plurality of selected options, requirements or requests. The user context may alternatively be a single value representing a general user context requirement, e.g. translation of text or directions to a destination.

The processor 150 generates in real-time images of the scene with an augmented part of the images including replacement signage determined by the contextual signage information in place of signage on the sign 120.

The video display 110 displays the real-time images of the scene. The augmented video stream provides replacement signage information to the device user based on extracted embedded information received from the identifying lamp 140 and the user context, by including the augmented part of each real-time image in the video stream.

The video display may be part of a display screen also displaying a representation of data stored by the computing device (for the augmented reality application and for other applications) and may also display a cursor and dialog boxes and screens enabling interaction between a user and the programs and data stored on the computing device. Input mechanisms such as an on-screen keyboard may enable a user to input data and instructions to the computing device.

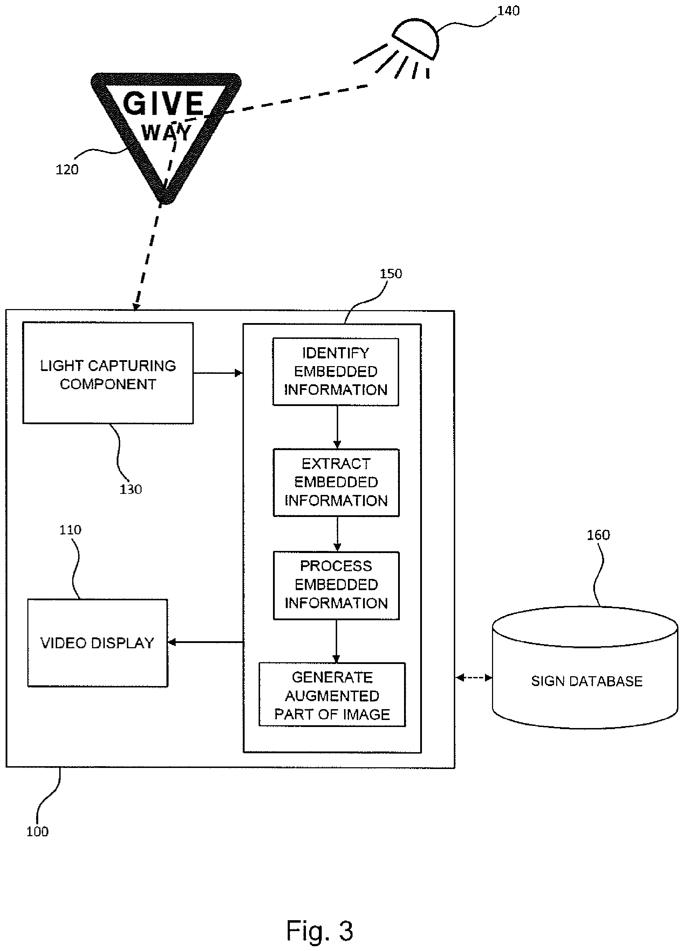

Figure 3 illustrates a particular embodiment of the augmented reality system including the augmented reality device 100 of Figure 2. The augmented reality system of Figure 3 differs from the augmented reality system of Figure 1 in that it includes the video display 110, processor 150 and light capturing component 130 of the augmented reality device 100, as discussed in reference to Figure 2 above. The optional sign database 160 and its connection to the device is shown, but may be omitted.

The replacement signage may be determined by transmitting the user context from the augmented reality device 100 to the sign database and replacement signage may be identified for the particular sign 120 based on the contextual signage information as provided by the database. The embedded information may include an identifier for identifying the sign 120 from among a plurality of signs. The identifier may be transmitted to the sign database 160.

The sign database 160 may alternatively be located within the augmented reality device 100 such that the user context and/or identifier may be provided to the sign database 160 directly without requiring a transmitter-receiver arrangement between the augmented reality device 100 and the sign database 160.

The determination of contextual signage information may, for example, be performed by providing values to the sign database 160 and comparing the values with a plurality of contextual signage information values stored within the sign database 160 for each sign 120. The contextual signage information value having a value closest to at least one user context value may be selected.

The augmented part is generated for each real-time image by determining the location, and thus the scale and orientation of the sign 120 with respect to device 100. The absolute location of the sign 120 may be included in the embedded information of the reflected light captured by the augmented reality device 100. The location of the augmented reality device 100 may be determined by a global positioning system (GPS) located within the augmented reality device 100. The orientation and scale of the sign 120 relative to the augmented reality device 100 may be determined using image processing technology. Further information used in generating the augmented part for each real-time image may include field of view and depth of view. The location, scale and orientation may be re-generated for each individual real-time image to compensate for a case where the augmented reality device 100 is moving and/or the scene in which the sign 120 is located is changing.

The real-time images of the scene are generated to include the augmented part, which includes the replacement signage. The real-time images are combined in chronological order by the processor 150 in order to generate the augmented video stream that includes the replacement signage. The augmented part is incorporated into each real-time image such that it appears as if the replacement signage is part of the augmented video stream when the real-time images are combined. The augmented part may completely replace an original image of the sign 120 or be superimposed over part of the original image of the sign 120.

Figure 4 illustrates the process of augmenting a video display using context of a device user. In the first step, S400, video stream information is input into the augmented reality device 100 of Figures 1 to 3. The video stream information is a captured video stream of a scene that includes reflected light from the sign 120. The reflected light is emitted from an identifying lamp 140, which performs the function of embedding information into the reflected light by virtue of, for example, colour modulation.

Identification step S420 identifies whether or not embedded information, embedded into the reflected light by the identifying lamp 140 in step S400, is included in the captured video stream information. If no embedded information is identified as being present in the captured video stream information, the process returns to step S400. If embedded information is identified as being present in the captured video stream information, the process continues to extraction step S440.

The extraction step S440 extracts the embedded information identified in step S420 as being present in the captured video stream information.

Step S460 processes the extracted embedded information, extracted in step S440, and a user context acquired, for example, from the device user or from an analysis of the device user's behaviour or other applications executing on the device. The extracted embedded information and the user context are used in order to produce contextual signage information.

The generation step S480 generates an augmented part of the scene in real-time images. The augmented part includes replacement signage that is determined by the contextual signage information produced in step S460 (in the sense that it is a formatted and thus ready-to-display version of the contextual signage information). The area of the video stream input in step S400 that includes signage of the sign 120 is replaced with replacement signage. The augmentation of the video stream is performed by replacing each image in the video stream with the signage to be replaced with the corresponding real-time image generated by the augmented reality device 100, which includes the augmented part and the replacement signage. The augmented part is formatted taking into account the distance of the sign 120 from the augmented reality device 100 and hence the scale and orientation of the sign 120 in the video stream.

In step S500, the augmented video stream generated in step S480 is output to the video display 110 in real-time. The video stream is generated by displaying each of the generated real-time images, including augmented parts, in chronological order at a frequency of, for example, 50Hz.

Embodiments may combine text augmentation technology with identifying lamps to create useable augmented reality modifications of signage in a user's environment.

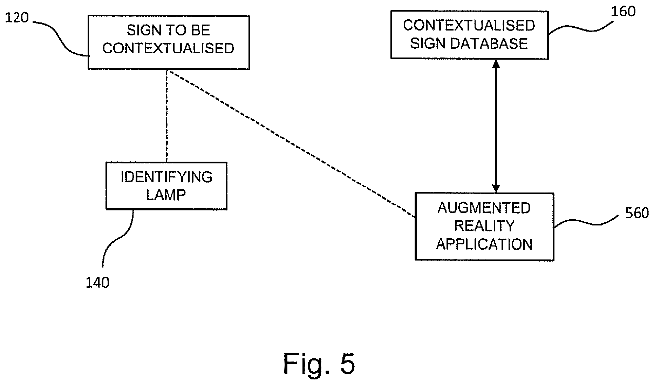

Figure 5 illustrates a particular embodiment of the augmented reality system. The proposed system comprises four major components; the sign to be contextualised 120, the identifying lamp 140, the augmented reality application 560 and the contextualised sign database 160.

The augmented reality application 560 may be a software application, a software program or firmware for the augmented reality device 100.

The sign to be contextualised 120 may be an ordinary sign existing within the environment so that no modifications are required to the sign. The augmented reality system may change the contents of the sign 120, as presented to the device user through the augmented reality application 560, according to the user's context.

The sign 120 is tagged in a way that may be easily, efficiently and reliably identified by, for example, an application processing the data from the camera of a smartphone or augmented reality glasses. The camera view may be constantly changing as the device user moves through the environment thereby making interpretation of the view through standard image processing techniques difficult within the processing limitation of a smartphone.

Embodiments may overcome the processing limitation of a smartphone by using identifying lamps 140 that emit coded signals which may be easily picked up by processing within a smartphone. The coded signal may be used to identify an approximate location of a target sign 120 in the smartphone's field of view. In the embodiment illustrated in Figure 5, the lamp 140 may also transmit an identifier that is used to consult the database 160 for information about the sign 120 thereby simplifying the processing of creating an augmented reality view. The database 160 may include context-specific modification of the sign's contents and information about the sign 120 that aids the view rendering process. In another embodiment of the invention, the context-specific modification of the sign's contents and information about the sign 120 that aids the view rendering process may be encoded into the identifier transmitted by the lamp 140.

The identifying lamp 140 encodes the identifier (or tag), for example, using colour modulation as described above. This lamp 140 is aimed at the sign 120 in order to illuminate the sign 120. The illumination does not need to be precise, it may be of only part of the sign 120 or it may be of an area larger than the sign 120. The requirements for the illumination are that it may be picked up from a predefined distance by the augmented reality application 560, and that the illumination of different signs to be contextualised 120 is distinguished, e.g. by different identifier tags and/or embedded information.

The augmented reality application 560 executes on a device 100 held by the device user, e.g. a smartphone. The augmented reality application 560 presents a view of the environment obtained from a camera on the device to the device user through a screen, e.g. the video display of Figures 2 and 3. This view is modified from the original view to replace the information on the actual sign 120 with information aimed at the user according to the user context. The augmented reality application 560 extracts tags or identifiers from its current view, maps these tags or identifiers to information about the sign 120 using the sign database 160 and then renders a new contextualised view for the device user.

The sign database 160 contains at least the text that the sign 120 displays together with any variants that may be displayed to the device user of the augmented reality system. These variants may include translations of the sign text into the preferred language of the device user, which may be selected according to the context transmitted from the user's equipment to the sign database 160. In certain embodiments that allow dynamic modifications of the signage, the sign database 160 may contain, or compute, the variants according to the transmitted context (for example, a dynamic sign may superimpose an arrow indicating the route to the user's departure gate if the system is implemented in an airport). In this case the tag identifies a sign, the database knows where the sign is and so what direction indicators to show to guide to all possible departure gates. The user's gate is transmitted to the database as part of the context of the database query and the database returns the appropriate direction indicator with the rest of the sign information. The sign database 160 may also include information about the sign's context that may be used to aid the rendering of the contextual text onto the augmented reality view presented to the device user. This sign contextual information may include how to identify the borders and other characteristics of the physical sign 120, e.g. the colour, width, shape and extent of coverage of the sign 120. The sign contextual information may be used to identify where in the user's view the sign 120 should be rendered and what the current sign orientation and scale is with respect to the user's view. The rendered view may be correctly scaled and transformed to merge naturally into the augmented reality view based on the sign contextual information. The sign database 160 may also include additional information to aid the augmented reality view generation process, such information may include the colour of the sign 120 or the text and the typeface used for the sign's text. The generated text may be presented symbolically, as numbers and identifiers, or as an image that is interpreted as a template of the sign 120 to be scaled and transformed to match the image of the actual sign.

The dashed lines in Figure 5 represent the transmission of light from the lamp 140 to the sign 120 and the reflected light from the sign 120 to the augmented reality application 560. The solid lines in Figure 5 represents the transmission of digital information, either across a network, if the sign database 160 is remote, or internally within the augmented reality application for a local sign database 160.

The information transmitted between the sign database 160 and the augmented reality application 560 in Figure 5 includes the identifying lamp's tag (decoded) and the context of the user of the augmented reality application. The user's context is used to adapt the returned information, and thereby the information overlaid onto the augmented view, according to the user's requirements. The user's context may include the user's desired language and, for example, the user's intended destination (in a case where the overlays include directions).

The connection between the sign 120 and the sign database 160 does not necessarily require a wireless network or other real-time connection, and may instead be created during the installation and maintenance of the signs 120. For example, when a sign 120 and a corresponding identifying lamp 140 are installed, all contextualised information and any other associated information would be added to the sign database 160 at the same time.

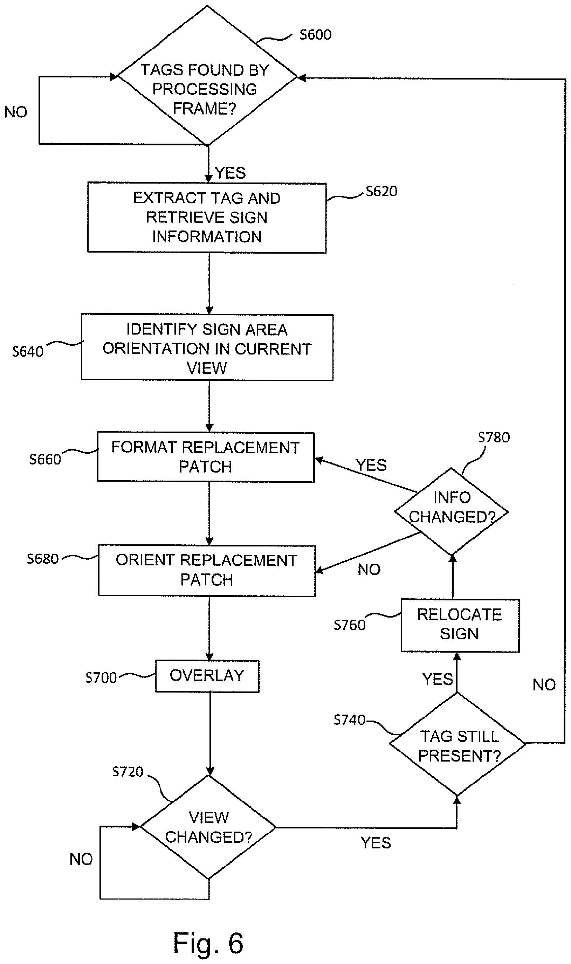

Figure 6 outlines a process of an embodiment of the augmented reality system. In step S600, the augmented reality application 560 processes image frames for tags by scanning the incoming video stream for tags embedded in the reflected light. Due to the design of the identifying lamp 140, the scanning process is lightweight and efficient.

If a tag is not identified within the incoming video stream, the process returns to step S600. If the existence of a tag is identified, the tag is extracted from the video stream in step S620. The extracted tag may be used as a key to retrieve sign information about the identified sign 120 from the sign database 160. The information returned from the sign database may be determined by the context of the user (e.g. text language) or the system application (e.g. specific direction indicators). In particular, the returned information may include:
- Text and/or images to be overlaid onto the augmented reality view.
- Sign characteristics such as background colour and border information.
- Sign text typeface and text colour.

Steps S600 to S640 show the two way exchange of data between the augmented reality application 560 and the contextualised sign database 160 of Figure 5. This two way exchange of information involves the augmented reality application 560 transmitting the extracted tag and the user context as held by the augmented reality application 560 to the contextualised sign database 160. The contextualised sign database 160 uses the information from the augmented reality application 560 to retrieve information about the sign 120, such as the sign text in the user's language (as determined by the transmitted user context) and any information about the sign 120 that will aid the augmented reality application in formatting replacement patches. Information extracted from the contextualised sign database 160 is transmitted back to the augmented reality application 560.

Step S640 identifies the region of the view that the sign 120 occupies and the orientation of the sign 120 relative to the current view of the user. This process is made more efficient by using the information retrieved in step S620. For example, by knowing the border characteristics, the application 560 may easily determine the sign edges and how their angles are skewed from a rectangular orientation. Step S640 determines which area of the view requires overlay and how the overlay should be transformed and orientated in order to look natural on the augmented reality presentation, e.g. the video display 110.

Step S660 renders and formats an ideal view of the overlay patch and step S680 transforms and orientates the rendered view into a coordinate system of the user's current view. This transformed and orientated overlay patch is overlaid onto the view presented to the user in step S700. The application 560 then monitors the incoming video stream for changes to the view in step S720, and if the view has changed the application 560 checks for the presence of tags in step S740. If there are no tags identified in the view in step S740, processing returns to step S600. Otherwise, the tagged sign 120 is relocated in the frame in step S760 using the information from step S660 and, if the application 560 requires it, the sign database 160 may be consulted for changes to the information to be displayed. Step S780 determines whether any new information has been acquired or whether the information has changed (the information to be displayed may change when the sign is augmented with dynamic information, the user has moved and the route indicator has to adapt or, perhaps, even a gate change requires rerouting the user). If new information is acquired or the information has changed, processing renews at step S660 (YES at step S780), otherwise the overlay is transformed to the current view by continuing at step S680 (NO at step S780).

Other embodiments have a reduced or eliminated reliance on a database of sign information. In the previous embodiment, the identifying lamp 140 of Figure 5 embeds a code within its illumination that uniquely identifies the particular lamp 140, and this unique tag is used as a key to extract information from the database 160 about the sign 120 that the lamp 140 is targeting, In an alternative embodiment, the tag itself may contain direct information about the sign 120. Coding schemes may be devised to aid the augmented reality application 560 in coding increased amounts of information about the sign 120 in order to realise this alternative embodiment (these coding schemes may be application and location specific depending on the development model of the augmented reality application 560).

For example, the coding scheme may include fields for:
- The language of the target sign 120 so that, in the absence of further information about the target sign 120, the text recognition and text translation phases may restrict their search space to known source and destination languages.
- Sign context, e.g. the environment of the sign such as airport, shopping centre and restaurant.
- The information type of the sign 120. In example application areas for this invention, important signs will be of a limited number of types (e.g. "Way Out", to "Gate x", "Baggage Claim", "Immigration", Customs" in an airport). Each of these types may be given a unique code within a field of the tag, and the augmented reality application 560 may store accurate translations for replacing the signage according to the unique code. By determining the text that should be displayed based on the unique code, the recognition phase may be simplified.
- The physical type of the sign. Many signs conform to standards and conventions with regard to type face, borders and colours. Knowing the sign's characteristics may simplify the recognition and replacement phases.
- A "do not augment" bit to identify signs that should not be modified, such as logos and brand names.

An example of a coding scheme is illustrated in Table 1 below (x indicates any value).

**Table 1**

| **Bits** | **Interpretation** |
|---|---|
| **0xxxxxxxxxxxxxxx** | Do not augment sign |
| **1xxxxxxxxxxxxxxx** | Augment sign |
| **x0xxxxxxxxxxxxxx** | Sign design is standardised |
| **x0yyyxxxxxxxxxxx** | yyy used to indicate which standard |
| **x1xxxxxxxxxxxxxx** | Sign design is not standardised |
| **x1yyxxxxxxxxxxxx** | yy indicates shape of sign (e.g. 00 = square, 01 = rectangle, 10 = circle, 11 = other) |
| **x1xxyxxxxxxxxxxx** | Y indicates border (1 = present, 0 = absent) |
| **xxxxx0xxxxxxxxxx** | Sign text is known |
| **xxxxx0yyyyyyyyyy** | Index into standard phrases |
| **xxxxx1xxxxxxxxxx** | Sign text is free (must be OCRed) |
| **xxxxx1yyyyyyyxxx** | yyyyyyy index into language of sign |
| **xxxxx1xxxxxxxyyy** | yyy indicates sign context |

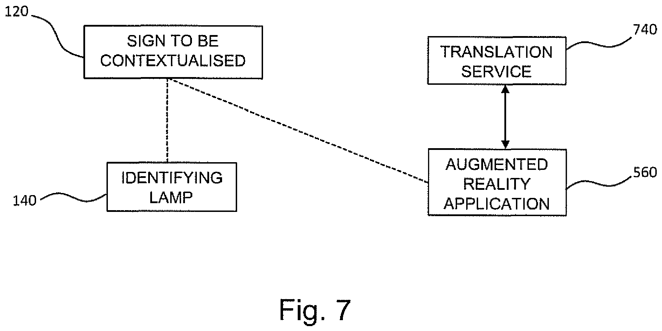

Figure 7 shows a schematic diagram for a particular embodiment of the augmented reality system, where the database 160 has been replaced by an, optionally consulted, translation service 740. Any sign text of the sign 120 that requires translation is transmitted from the augmented reality application 560 to the translation service 740, as represented by the solid line. The transmission contains the sign text to be translated, optionally the user context (such as the user's desired language) as held by the application 560 and optionally the sign's context as decoded from the tag transmitted by the lamp 140. The signs' context may be used to return the correct translation using the appropriate vocabulary for specialised locations.

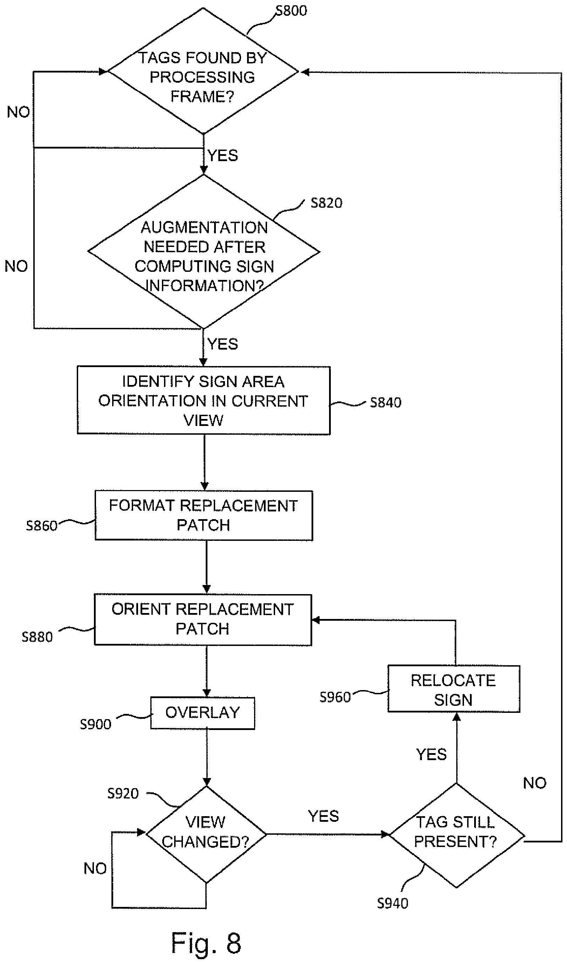

Figure 8 outlines a process of an embodiment of the augmented reality system. The process of Figure 8 differs from the process of Figure 6 in that steps S840, S860 and S880 may use information embedded in the augmented reality application 560, e.g. about the characteristics of standardised signs, when the sign type is extracted from the coding scheme. The process of Figure 8 does not include an equivalent step to that of step S780 in Figure 6, as dynamic changes to the sign content require information from an external database. This particular embodiment is intended to remove the need to consult any services external to the user's device and in that situation there is no way for the information needed to set up dynamic changes to come into the application (i.e. in an airport there is no way to find out which gate is the destination Steps S840 to S960 are equivalent processing functions to those of steps S640 to S760 of Figure 6.

In step S800 of Figure 8, if no tag is identified during the processing of image frames, the process returns to step S800. If a tag is identified in step S800, the process continues to step S820.

The processing in step S820 replaces the database consultation of step S620 in Figure 6. Step S820 computes the sign information by decoding the tag from the identifying lamp 140. If the coded tag indicates that no augmentation of the sign is required, processing will move from step S820 to S800. If the coded tag indicates that augmentation is required, processing continues to step S840.

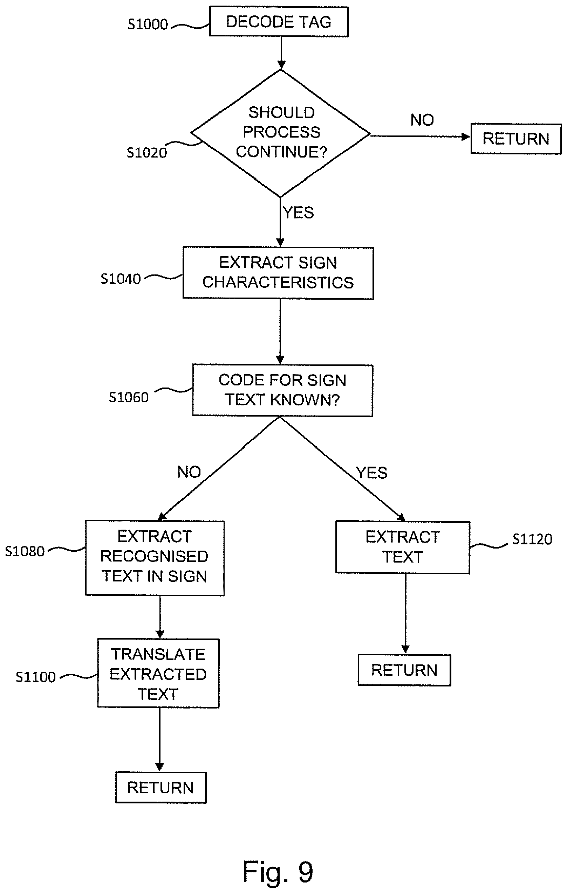

Figure 9 illustrates a more detailed process of step S820 of Figure 8. At step S1000, the tag is decoded and the various fields embedded in the tag are extracted from the embedded information and the process continues to step S1020. These various fields may include indicators of whether the target sign 120 should be augmented, the sign's physical characteristics, the sign information type, the sign context and the sign language.

At step S1020, if the decoded tag indicates that no augmentation of the sign is required, the processing of Figure 9 will end and the overall process will move from step S820 to S800. If the decoded tag indicates that augmentation is required, step S1020 determines that the process should continue to step S1040, where the sign's physical characteristics are determined, e.g. determining if the sign is a standard type. The determined sign's physical characteristics are later passed to steps S840, S860 and S880 of the process of Figure 8.

After the sign characteristics have been extracted, the process of Figure 9 continues to step S1060. At step S1060, if it is determined that the sign text is known (YES at step S1060), processing continues to S1120 where the known text is extracted from the translation service 740, and the extracted text is passed onto the remaining steps of the process of Figure 8. Otherwise, processing continues to step S1080, where optical character recognition is used to determine whether there is recognised text in the sign 120 and extract any recognised text. If the sign text is recognised and extracted, the sign text is passed to the translation service in step S1100 using the user language to constrain the translation. The resulting translated text is passed onto the remaining steps of Figure 8.

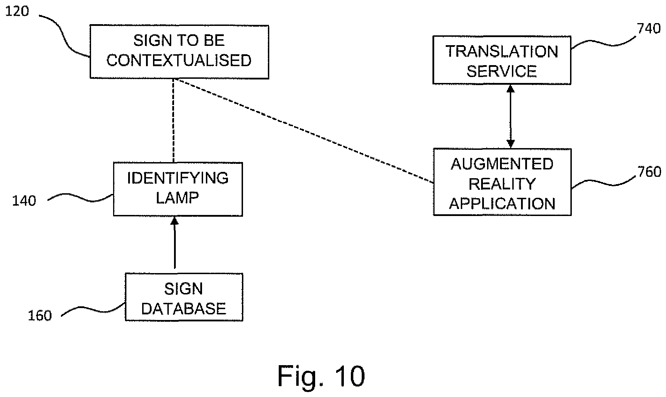

Figure 10 illustrates an embodiment of the augmented reality system in which the detailed knowledge of the environment of the sign to be contextualised 120 is separated from the client augmented reality application 760 by introducing a sign database 160 with a connection to the identifying lamp 140. With this configuration, the coded tag may be automatically modified according to changes in the environment of the sign, for example if the sign 120 is changed. In this particular embodiment, no direct connection is required between the augmented reality application 760 and an organisation responsible for the sign, since all the necessary information is contained within the tag. Such an embodiment may also include access to a translation service 740.

### BENEFITS

One benefit of invention embodiments is that their implementation may be invisible to the majority of customers but may seamlessly come into play for those that require their services. There is no discernible visible effect on the environment for customers that do not need to use the invention, the lighting of the targeted signs is normal to non-augmented perspectives. For those that require the inventions effects, the transition is seamless.

There is no need for the signs that are to be made dynamic or their illuminating lamps to be connected and some implementations of the user application may download the sign database to the user's device so that there is no need for an additional connection.

Connecting to a database that contains a full, accurate description of the sign characteristics allows seamless matching of the overlay to the current display with low computational overhead.

Application areas for dynamic signage that provides automatic and transparent translation include locations that have a large number of non-native language speakers passing through, such as:
- Airports and other transport hubs.
- Hospitals.
- Shops, shopping centres.
- Tourist locations.

Embodiments may also be used to guide users through complex buildings with which the users are unlikely to be familiar and where there are many different potential destinations and routes. Such buildings may include:
- Hospitals, where patients and visitors need to be guided to hospital wards or surgeries.
- Airports, where travellers need to be guided to departure gates.
- Large office blocks.

Instead of or as well as a conversion to a different text, embodiments may locate the device user and add user context specific arrows to point out the route to the specified user destination (as well as "no entry" marker to highlight incorrect routes). As this is an augmented reality view of the user's actual environment, following the guidance provided by the augmented reality view will be easier than following maps.

The augmented video stream may also include other contextual information, such as the estimated time to reach the destination.

Embodiments may also be adapted to present contextual advertising to a device user.

The augmented reality device may convey contextual information about a sign to a user in the form of an augmented part without affecting the aesthetics of the sign. By seamlessly embedding information into the light reflected from the sign, the augmented reality device is able to convey this contextual information without producing any discernible visible effect on the environment around the sign, or the sign itself. Therefore, the function of the augmented reality device remaining unobtrusive to third party observers of the sign, while the transmission of contextual information for those that desire the technical effect produced by the augmented reality device is seamless.

## Claims

1. An augmented reality device (100) to augment a video display (110) of a sign (120) using context of a device user, the device (100) comprising:
a light capture component (130) to capture video stream information of a scene including light reflected from the sign (120), the reflected light being emitted from an identifying lamp (140) which embeds sign information into the light;
a processor (150) to:
identify if the captured video stream information includes the embedded sign information and when the embedded sign information is included, to extract the embedded sign information;
process the extracted sign information and use a user context to produce contextual signage information; and to
generate, in real-time images of the scene, an augmented part of the images including replacement signage determined by the contextual signage information in place of signage on the sign (120);
a video display (110) to display the real-time images of the scene.

2. A device (100) according to claim 1, wherein:
the processor (150) is to use the user context in the form of one or more of a user language, user position and user destination to process the extracted information and produce contextual signage information.

3. A device (100) according to claim 1 or 2, wherein the processor (150) is to identify location of the sign (120) on the video display (110).

4. A device (100) according to any of the preceding claims, wherein:
the processor (150) is to format the augmented part of the images including the replacement signage so that it appears as if it is part of the sign (120) in the video stream.

5. A device (100) according to claim 4, wherein the formatting includes any of identification of an image area to be modified, tracking of the area through multiple frames including any distortions caused by device movement, matching background colour and shaping and/or sizing the contextual signage information as replacement signage to fit within the area.

6. A device (100) according to any of the preceding claims, further comprising:
device storage to store an embedded sign information coding scheme, the coding scheme being used by the processor (150) to extract the embedded sign information.

7. A device (100) according to claim 6, wherein:
the coding scheme uses a plurality of bits, including fields for one or more of the following:
language;
sign context of the sign environment;
information type of the sign;
physical type of the sign;
whether to augment or not.

8. A device (100) according to any of the preceding claims, wherein:
the extracted sign information includes an identifier; and
the processor (150) is to:
output the identifier and the user context to a sign database (160), wherein the sign database (160) links identifiers to variants of contextual signage information or replacement signage information, one of the variants for the identifier being selected according to the user context; and to
input the selected variant from the sign database (160); the selected variant being used as the contextual signage information or replacement signage.

9. A device (100) according to claim 8, wherein:
the device storage is further to store the sign database (160) as a local database.

10. A device (100) according to claim 8 or 9, wherein the sign database (160) includes physical information about the sign (120) which is used to format the contextual signage information by transmitting the physical information to the device (100) with the selected variant.

11. A device (100) according to claim 10, wherein the processor (150) is to replace the entire sign (120) as the augmented part of the image using the physical information to help determine an overlay position and orientation.

12. A device (100) according to any of the preceding claims, wherein:
the processor (150) is to
recognise sign text from the captured video stream information or from an embedded sign information coding scheme;
output the sign text and the user context to a translation service; and to
input a translation of the sign text from the translation service as the contextual signage information.

13. A system to augment video display of a sign on a device with context of a user, the system comprising:
an identifying lamp emitting light with embedded sign information, the embedded sign information embedded into the light;
a sign from which the light reflects;
a device according to any of the preceding claims, and optionally
a sign database linking sign information extracted from signs with variants of replacement signage information for selection according to the user context.

14. A method of augmenting a video display of a sign using context of a device user, the method comprising:
inputting video stream information from a captured video stream of a scene including reflected light from a sign, the reflected light being emitted from an identifying lamp which embeds sign information into the light;
identifying if the video stream information includes embedded sign information and when embedded sign information is included, extracting the embedded sign information;
processing the extracted sign information and using a user context to produce contextual signage information; and
generating, in real-time images of the scene, an augmented part of the images including replacement signage determined by the contextual signage information in place of signage on the sign;
outputting the real-time images of the scene for real-time video display.

15. A computer program, which when executed on a portable computer device carries out the method of the preceding method claim.

## Patentansprüche

1. Vorrichtung (100) für erweiterte Realität zum Erweitern einer Videoanzeige (110) eines Schilds (120) unter Verwendung von Kontext eines Benutzers der Vorrichtung, wobei die Vorrichtung (100) umfasst:
eine Lichterfassungskomponente (130) zum Erfassen von Videostrominformationen einer Szene, welche von dem Schild (120) reflektiertes Licht umfasst, wobei das reflektierte Licht von einer identifizierenden Lampe (140) emittiert wird, welche Schildinformationen in das Licht einbettet;
einen Prozessor (150), eingerichtet zum:
Identifizieren, ob die erfassten Videostrominformationen die eingebetteten Schildinformationen umfassen, und, falls die eingebetteten Schildinformationen umfasst sind, die eingebetteten Schildinformationen zu extrahieren;
Verarbeiten der extrahierten Schildinformationen und Benutzen eines Benutzerkontexts, um kontextuelle Beschilderungsinformationen zu erzeugen; und zum
Generieren, in Echtzeitbildern der Szene, eines erweiterten Teils der Bilder, welcher anstelle einer Beschilderung auf dem Schild (120) eine Austausch-Beschilderung aufweist, die durch die kontextuellen Beschilderungsinformationen bestimmt ist;
eine Videoanzeige (110) zum Anzeigen der Echtzeitbilder der Szene.

2. Vorrichtung (100) nach Anspruch 1, wobei:
der Prozessor (150) eingerichtet ist, den Benutzerkontext in Form einer Benutzersprache und/oder einer Benutzerposition und/oder eines Benutzer-Zielorts zu benutzen, um die extrahierten Informationen zu verarbeiten und kontextuelle Beschilderungsinformationen zu erzeugen.

3. Vorrichtung (100) nach Anspruch 1 oder 2, wobei der Prozessor (150) eingerichtet ist zum Identifizieren eines Orts des Schilds (120) auf der Videoanzeige (110).

4. Vorrichtung (100) nach einem der vorhergehenden Ansprüche, wobei:
der Prozessor (150) eingerichtet ist, den erweiterten Teil der Bilder, welcher die Ersatzbeschilderung aufweist, derart zu formatieren, dass es scheint, als ob er Teil des Schilds (120) in dem Videostrom wäre.

5. Vorrichtung (100) nach Anspruch 4, wobei das Formatieren Beliebiges umfasst von:
Identifizieren eines zu modifizierenden Bildbereichs, Verfolgen des Bereichs über mehrere Rahmen hinweg mit ggf. durch Bewegung der Vorrichtung verursachten Verzerrungen, Abgleichen einer Hintergrundfarbe und Formen und/oder Dimensionieren der kontextuellen Beschilderungsinformationen als Ersatzbeschilderung dergestalt, dass diese in den Bereich passt.

6. Vorrichtung (100) nach einem der vorhergehenden Ansprüche, ferner umfassend:
einen Vorrichtungsspeicher zum Speichern eines Eingebettete-Schildinformation-Codierungsschemas, wobei das Codierungsschema von dem Prozessor (150) benutzt wird, um die eingebetteten Schildinformationen zu extrahieren.

7. Vorrichtung (100) nach Anspruch 6, wobei:
das Codierungsschema mehrere Bits benutzt, welche Felder für eines oder mehrere von Folgendem umfassen:
Sprache;
Schildkontext der Schildumgebung;
Informationstyp des Schildes;
physikalischer Typ des Schildes;
ob zu erweitern ist oder nicht.

8. Vorrichtung (100) nach einem der vorhergehenden Ansprüche, wobei:
die extrahierten Schildinformationen einen Identifikator umfassen; und
der Prozessor (150) eingerichtet ist zum:
Ausgeben des Identifikators und des Benutzerkontexts an eine Schilddatenbank (160), wobei die Schilddatenbank (160) Identifikatoren mit Varianten von kontextuellen Beschilderungsinformationen oder Austausch-Beschilderungsinformationen verknüpft, wobei eine der Varianten für den Identifikator anhand des Benutzerkontexts ausgewählt wird; und zum Eingeben der ausgewählten Variante aus der Schilddatenbank (160); wobei die ausgewählte Variante als die kontextuellen Beschilderungsinformationen oder die Austausch-Beschilderung benutzt wird.

9. Vorrichtung (100) nach Anspruch 8, wobei:
der Vorrichtungsspeicher ferner dazu eingerichtet ist, die Schilddatenbank (160) als lokale Datenbank zu speichern.

10. Vorrichtung (100) nach Anspruch 8 oder 9, wobei die Schilddatenbank (160) physikalische Informationen über das Schild (120) umfasst, welche zum Formatieren der kontextuellen Beschilderungsinformationen benutzt werden, indem die physikalischen Informationen mit der ausgewählten Variante an die Vorrichtung (100) übertragen werden.

11. Vorrichtung (100) nach Anspruch 10, wobei der Prozessor (150) dazu eingerichtet ist, das gesamte Schild (120) als den erweiterten Teil des Bildes auszutauschen, wobei die physikalischen Informationen zur Unterstützung beim Bestimmen einer Überlagerungsposition und -ausrichtung benutzt werden.

12. Vorrichtung nach einem der vorhergehenden Ansprüche, wobei:
der Prozessor (150) eingerichtet ist zum:
Erkennen von Schildtext aus den erfassten Videostrominformationen oder aus einem Eingebettete-Schildinformation-Codierungsschema;
Ausgeben des Schildtexts und des Benutzerkontexts an einen Übersetzungsdienst; und
Eingeben einer Übersetzung des Schildtexts von dem Übersetzungsdienst als die kontextuellen Beschilderungsinformationen.

13. System zum Erweitern einer Videoanzeige eines Schilds auf einer Vorrichtung mit Kontext eines Benutzers, wobei das System umfasst:
eine identifizierende Lampe, welche Licht mit eingebetteten Schildinformationen emittiert,
wobei die eingebetteten Schildinformationen in das Licht eingebettet sind;
ein Schild, von welchem das Licht reflektiert wird;
eine Vorrichtung nach einem der vorhergehenden Ansprüche, und optional eine Schilddatenbank, welche von Schildern extrahierte Schildinformationen mit Varianten von Austauschbeschilderungsinformationen zur Auswahl anhand des Benutzerkontexts verknüpft.

14. Verfahren zum Erweitern einer Videoanzeige eines Schilds unter Verwendung eines Kontexts eines Benutzers einer Vorrichtung, wobei das Verfahren umfasst:
Eingeben von Videostrominformationen aus einem erfassten Videostrom einer Szene, welche reflektiertes Licht von einem Schild umfasst, wobei das reflektierte Licht von einer identifizierenden Lampe ausgestrahlt wird, welche Schildinformationen in das Licht einbettet;
Identifizieren, ob die Videostrominformationen eingebettete Schildinformationen umfassen, und, wenn eingebettete Schildinformationen umfasst sind, Extrahieren der eingebetteten Schildinformationen;
Verarbeiten der extrahierten Schildinformationen und Benutzen eines Benutzerkontexts, um kontextuelle Beschilderungsinformationen zu erzeugen; und
Erzeugen, in Echtzeitbildern der Szene, eines erweiterten Teils der Bilder, welcher anstelle einer Beschilderung auf dem Schild eine Austauschbeschilderung aufweist, die durch die kontextuellen Beschilderungsinformationen bestimmt ist;
Ausgeben der Echtzeitbilder der Szene zur Echtzeit-Videoanzeige.

15. Computerprogramm, welches, wenn es auf einer portablen Computervorrichtung ausgeführt wird, das Verfahren des voranstehenden Verfahrensanspruchs ausführt.

## Revendications

1. Dispositif de réalité augmentée (100) pour augmenter un affichage vidéo (110) d'un panneau (120) en utilisant le contexte d'un utilisateur de dispositif, le dispositif (100) comprenant :
un composant de capture de lumière (130) pour capturer des informations de flux vidéo d'une scène comprenant de la lumière réfléchie par le panneau (120), la lumière réfléchie étant émise par une lampe d'identification (140) qui incorpore des informations de panneau dans la lumière ;
un processeur (150) pour :
déterminer si les informations de flux vidéo capturées incluent les informations de panneau incorporées et, lorsque les informations de panneau incorporées sont incluses, pour extraire les informations de panneau incorporées ;
traiter les informations de signalisation extraites et utiliser un contexte d'utilisateur pour produire des informations de signalisation contextuelles ; et pour
générer, dans des images en temps réel de la scène, une partie augmentée des images comprenant une signalisation de remplacement déterminée par les informations de signalisation contextuelles au lieu d'une signalisation sur le panneau (120) ;
un affichage vidéo (110) pour afficher les images en temps réel de la scène.

2. Dispositif (100) selon la revendication 1, dans lequel :
le processeur (150) doit utiliser le contexte d'utilisateur sous la forme d'une ou de plusieurs parmi une langue d'utilisateur, une position d'utilisateur et une destination d'utilisateur pour traiter les informations extraites et produire des informations de signalisation contextuelle.

3. Dispositif (100) selon la revendication 1 ou 2, dans lequel le processeur (150) doit identifier l'emplacement du panneau (120) sur l'affichage vidéo (110).

4. Dispositif (100) selon l'une quelconque des revendications précédentes, dans lequel :
le processeur (150) doit formater la partie augmentée des images comprenant la signalisation de remplacement, de sorte qu'elle apparaisse comme si elle faisait partie du panneau (120) dans le flux vidéo.

5. Dispositif (100) selon la revendication 4, dans lequel le formatage comprend un quelconque parmi une identification d'une zone d'image à modifier, un suivi de la zone à travers de multiples trames, y compris toute distorsion provoquée par un mouvement de dispositif, la mise en correspondance d'une couleur d'arrière-plan et la mise en forme et/ou le dimensionnement des informations de signalisation contextuelles en tant que signalisation de remplacement pour adaptation à la zone.

6. Dispositif (100) selon l'une quelconque des revendications précédentes, comprenant en outre :
une mémoire de dispositif pour stocker un schéma de codage d'informations de panneau incorporé, le schéma de codage étant utilisé par le processeur (150) pour extraire les informations de panneau incorporées.

7. Dispositif (100) selon la revendication 6, dans lequel :
le schéma de codage utilise une pluralité de bits, y compris des champs pour un ou plusieurs parmi les éléments suivants :
langue ;
contexte de panneau de l'environnement de panneau ;
type d'information du panneau ;
type physique du panneau ;
à augmenter ou non.

8. Dispositif (100) selon l'une quelconque des revendications précédentes, dans lequel :
les informations de panneau extraites comprennent un identifiant ; et
le processeur (150) doit :
délivrer en sortie l'identifiant et le contexte utilisateur vers une base de données de panneaux (160), dans lequel la base de données de panneaux (160) relie des identifiants à des variantes d'informations de signalisation contextuelles ou à des informations de signalisation de remplacement, l'une des variantes de l'identifiant étant sélectionnée en fonction du contexte d'utilisateur ; et
entrer la variante sélectionnée dans la base de données de panneaux (160) ; la variante sélectionnée étant utilisée comme informations de signalisation contextuelles ou comme signalisation de remplacement.

9. Dispositif (100) selon la revendication 8, dans lequel :
la mémoire de dispositif doit en outre stocker la base de données de panneaux (160) en tant que base de données locale.

10. Dispositif (100) selon la revendication 8 ou 9, dans lequel la base de données de panneaux (160) comprend des informations physiques concernant le panneau (120) qui sont utilisées pour formater les informations de signalisation contextuelles en transmettant les informations physiques au dispositif (100) avec la variante sélectionnée.

11. Dispositif (100) selon la revendication 10, dans lequel le processeur (150) doit remplacer le panneau entier (120) en tant que partie augmentée de l'image en utilisant les informations physiques pour aider à déterminer une position et une orientation de superposition.

12. Dispositif (100) selon l'une quelconque des revendications précédentes, dans lequel :
le processeur (150) doit
reconnaître un texte de panneau à partir des informations de flux vidéo capturées ou d'un schéma de codage d'informations de panneau incorporé ;
délivrer en sortie le texte de panneau et le contexte d'utilisateur vers un service de traduction ; et
entrer une traduction du texte de panneau en provenance du service de traduction en tant qu'informations de signalisation contextuelles.

13. Système pour augmenter un affichage vidéo d'un panneau sur un dispositif avec le contexte d'un utilisateur, le système comprenant :
une lampe d'identification émettant de la lumière avec des informations de panneau incorporées, les informations de panneau étant incorporées dans la lumière ;
un panneau à partir duquel la lumière se reflète ;
un dispositif selon l'une quelconque des revendications précédentes, et éventuellement
une base de données de panneaux reliant les informations de panneaux extraites de panneaux avec des variantes d'informations de signalisation de remplacement pour une sélection en fonction du contexte d'utilisateur.

14. Procédé pour augmenter un affichage vidéo d'un panneau en utilisant un contexte d'un utilisateur de dispositif, le procédé comprenant les étapes consistant à :
entrer des informations de flux vidéo à partir d'un flux vidéo capturé d'une scène comprenant de la lumière réfléchie par un panneau, la lumière réfléchie étant émise par une lampe d'identification qui incorpore des informations de panneau dans la lumière ;
identifier si les informations de flux vidéo incluent des informations de panneau incorporées et, lorsque des informations de panneau intégrées sont incluses, extraire les informations de panneau incorporées ;
traiter les informations de signalisation extraites et utiliser un contexte d'utilisateur pour produire des informations de signalisation contextuelles ; et
générer, dans des images en temps réel de la scène, une partie augmentée des images incluant une signalisation de remplacement déterminée par les informations de signalisation contextuelles au lieu de la signalisation sur le panneau ;
produire les images en temps réel de la scène pour un affichage vidéo en temps réel.

15. Programme informatique qui, lorsqu'il est exécuté sur un dispositif informatique portable, met en oeuvre le procédé de la revendication de procédé précédente.
